# EUROPEAN PATENT SPECIFICATION

(11) **EP 4 395 432 B1**
(45) Date of publication and mention of the grant of the patent: **25.11.2026**
(21) Application number: 21954528.2
(22) Date of filing: 25.08.2021
(51) Int. Cl.: H04W 68/02, H04W 68/00

(54) **INFORMATION PROCESSING METHODS AND WIRELESS COMMUNICATION SYSTEM**
INFORMATIONSVERARBEITUNGSVERFAHREN UND DRAHTLOSES KOMMUNIKATIONSSYSTEM
PROCÉDÉS DE TRAITEMENT D'INFORMATIONS ET SYSTÈME DE COMMUNICATION SANS FIL

(43) Date of publication of application: 03.07.2024
(73) Proprietor: Beijing Xiaomi Mobile Software Co., Ltd., Beijing 100085 (CN)
(72) Inventor: LI, Yanhua, Beijing 100085 (CN)
(74) Representative: Stöckeler, Ferdinand
(86) International application number: PCT/CN2021/114614
(87) International publication number: WO 2023/023992

(56) References cited:
- WO-A1-2021/062671
- WO-A1-2021/062671
- CN-A- 108 271 215
- CN-A- 110 944 371
- CN-A- 111 294 892
- CN-A- 113 260 023
- US-A1- 2018 199 310
- US-A1- 2019 313 364
- XIAOMI: "Potential paging enhancements for power saving", vol. RAN WG1, no. e-Meeting; 20210816 - 20210827, 7 August 2021 (2021-08-07), XP052038705, Retrieved from the Internet <URL:https://ftp.3gpp.org/tsg_ran/WG1_RL1/TSGR1_106-e/Docs/R1-2107932.zip R1-2107932.doc> [retrieved on 20210807]
- ERICSSON: "UE-group wake-up signal in LTE-MTC", 3GPP DRAFT; R1-1812119 UE-GROUP WAKE-UP SIGNAL IN LTE-MTC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Spokane, U.S.A.; 20181112 - 20181116, 11 November 2018 (2018-11-11), Mobile Competence Centre ; 650, route des Lucioles ; F-06921 Sophia-Antipolis Cedex ; France , XP051553960

## Description

### TECHNICAL FIELD

The disclosure relates to but is not limited to the field of communication technologies, more particularly, to information processing methods and a wireless communication system.

### BACKGROUND

In the related art, if paging is performed in a way of not performing paging grouping, for example, when all the User Equipments (UEs) at a Paging Occasion (PO) are waken up and the probabilities of paging for the UEs within the PO are different, a UE with a relatively low probability of paging may be awakened incorrectly, which may cause unnecessary power consumption. Therefore, it is necessary to consider paging grouping for the UEs. However, it is not clear how a base station notifies the UE of a supported paging grouping mode, and the UE is unable to accurately know a paging grouping resource used by the UE based on the notified paging grouping mode.

WO 2021062671 A1 discloses a method and apparatus for grouping user equipments (UEs). A method according to an embodiment of the present application includes: determining grouping rule information on a set of UE grouping rules for wake up signal (WUS) supported in a base station (BS); and configuring WUS resource information and group information associated with the set of grouping rules. Embodiments of the present application can improve the legacy WUS mechanism and efficiently reduce false wake up probability.

### SUMMARY

Embodiments of the disclosure provide information processing methods and a wireless communication system.

The invention is set out in the appended set of claims.

The technical solutions provided by the embodiments of the disclosure may include the following beneficial effects.

In the embodiments of the disclosure, the first information is sent by the base station. The first information is configured to determine a paging grouping mode supported by the base station, and/or, the first information is configured to determine a mapping relation between a paging group determined by the paging grouping mode supported by the base station and a paging grouping resource. In this way, in the embodiments of the disclosure, the base station may inform the UE of the paging grouping mode supported by the base station and/or the mapping relation between the paging group determined by the paging grouping mode supported by the base station and the paging grouping resource. In this way, the UE can accurately know the paging grouping mode supported by the base station. Moreover, if the first information is used to determine the mapping relation between the paging group determined by the paging grouping mode supported by the base station and the paging grouping resource, the UE can learn both the paging grouping mode supported by the base station and the paging grouping resource for monitoring paging based on the mapping relation at a time, which has a characteristic of small signaling overhead.

It should be understood that the above general description and the following detailed description are only exemplary and explanatory, and do not limit the embodiments of the disclosure.

### BRIEF DESCRIPTION OF THE DRAWINGS

FIG. 1 is a schematic diagram of a wireless communication system.
FIG. 2 is a flowchart of an information processing method according to an exemplary embodiment of the disclosure.
FIG. 3 is a flowchart of an information processing method according to an exemplary embodiment of the disclosure.
FIG. 4 is a flowchart of an information processing method according to an exemplary embodiment of the disclosure.
FIG. 5 is a flowchart of an information processing method according to an exemplary embodiment of the disclosure.
FIG. 6 is a flowchart of an information processing method according to an exemplary embodiment of the disclosure.
FIG. 7 is a flowchart of an information processing method according to an exemplary embodiment of the disclosure.
FIG. 8 is a block diagram of an information processing apparatus according to an exemplary embodiment of the disclosure.
FIG. 9 is a block diagram of an information processing apparatus according to an exemplary embodiment of the disclosure.
FIG. 10 is a block diagram of a UE according to an exemplary embodiment.
FIG. 11 is a block diagram of a base station according to an exemplary embodiment.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the disclosure. Instead, they are merely examples of apparatuses and methods consistent with aspects related to the disclosure as recited in the appended claims.

The terms used in the disclosure are only for the purpose of describing specific embodiments, and are not intended to limit the embodiments of the disclosure. The singular forms of "a" and "the" used in the embodiments of the disclosure and appended claims are also intended to include plural forms, unless the context clearly indicates other meanings. It should also be understood that the term "and/or" as used herein refers to and includes any or all possible combinations of one or more associated listed items.

It is understandable that although the terms "first", "second", and "third" may be used in the embodiments of the disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if" as used herein can be interpreted as "when", "while" or "in response to determining".

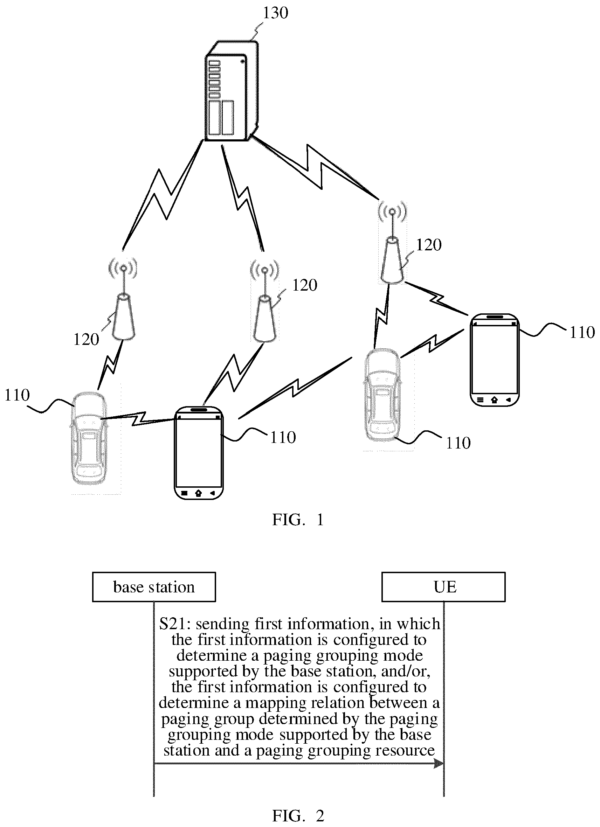

FIG. 1 is a schematic diagram illustrating a wireless communication system according to an embodiment of the disclosure. As illustrated in FIG. 1, the wireless communication system is a communication system based on a cellular mobile communication technology. The wireless communication system may include: a plurality of User Equipments (UEs) 110 and a plurality of base stations 120.

The UE 110 may be a device that provides voice and/or data connectivity to a user. The UE 110 may communicate with one or more core networks via a Radio Access Network (RAN). The UE 110 may be an Internet of Things (IoT) UE, such as a sensor device, a mobile phone (or "cellular" phone), and a computer with an IoT UE. The UE 110 may be a stationary, portable, pocket-sized, handheld, computer-built, or vehicle-mounted device, such as, a Station (STA), a subscriber unit, a subscriber station, a mobile station, a mobile, a remote station, an access point, a remote terminal, an access terminal, a user terminal, a user agent, a user device, or a UE. Or, the UE 110 may be an unmanned aerial vehicle device. Or, the UE 110 may be an in-vehicle device, for example, an electronic control unit (ECU) having a wireless communication function, or a wireless UE external to the ECU. Or, the UE 110 can also be a roadside device, for example, a street light, a signal light, or other roadside devices having a wireless communication function.

The base station 120 may be a network side device in the wireless communication system. The wireless communication system may be the 4th Generation (4G) mobile communication system, also known as a Long Term Evolution (LTE) system. Or, the wireless communication system may also be a 5G system, also known as a New Radio (NR) system or a 5G NR system. Or, the wireless communication system may be any next generation system of the 5G system. An access network in the 5G system may be called a New Generation-RAN (NG-RAN).

The base station 120 can be an evolved base station (eNB) employed in the 4G system. Or, the base station 120 may be a base station (gNB) with a centralized distributed architecture employed in the 5G system. When the base station 120 adopts the centralized distributed architecture, it usually includes a Central Unit (CU) and at least two Distributed Units (DUs). The CU is equipped with protocol stacks of a Packet Data Convergence Protocol (PDCP) layer, a Radio Link Control (RLC) layer, or a Media Access Control (MAC) layer. The DU is equipped with a protocol stack of a physical (PHY) layer, and the specific implementation of the base station 120 is not limited in the embodiments of the disclosure.

A wireless connection can be established between the base station 120 and the UE 110 via a radio interface. In different implementations, the radio interface is a radio interface based on the 4G standard. Or, the radio interface is a radio interface based on the 5G standard, such as a NR. Or, the radio interface may also be a radio interface based on the standard of the next generation of 5G.

In some embodiments, End to End (E2E) connections can be established between the UEs 110 in scenarios, such as, Vehicle to Vehicle (V2V) communication, Vehicle to Infrastructure (V2I) communication, and Vehicle to Pedestrian (V2P) communication in Vehicle to Everything (V2X) communication.

The above UE may be considered to be a terminal in the following embodiments.

In some embodiments, the above wireless communication system may also include a network management device 130.

The plurality of base stations 120 are connected to the network management device 130 separately. The network management device 130 may be a core network device in the wireless communication system, for example, a Mobility Management Entity (MME) in an Evolved Packet Core (EPC) network. Or, the network management device may be another core network device, such as a Serving Gate Way (SGW), a Public Data Network GateWay (PGW), a Policy and Charging Rules Function (PCRF), or a Home Subscriber Server (HSS), etc. The implementation form of the network management device 130 is not limited in the embodiments of the disclosure.

In order to facilitate understanding by those skilled in the art, embodiments of the disclosure illustrate a plurality of implementations to provide a clear description of a technical solution of the embodiments of the disclosure. Certainly, those skilled in the art may understand that the plurality of embodiments provided by the embodiments of the disclosure may be performed alone, or may be performed together with methods of other embodiments in the embodiments of the disclosure, or may be performed alone or in combination with other embodiments and then together with some methods in the related art, which is not limited in the embodiments of the disclosure.

In order to better understand the technical solutions described in any of the embodiments of the disclosure, a paging grouping scene in the related art is described as follows.

In an embodiment, if paging grouping is not performed, for all awaken UEs within a Paging Occasion (PO), a UE with a relatively low probability of paging may be awakened incorrectly, which may cause unnecessary power consumption. Therefore, paging grouping may be performed for the UEs, and the UEs are paged by using a paging grouping mode. In an embodiment, paging group information may be carried in paging Downlink Control Information (DCI) or in a Paging Early Indication (PEI). In an embodiment, a reserved bit in the paging DCI or a preset bit indicated by the PEI is used to indicate a paging group. In another embodiment, a plurality of reserved bits in the paging DCI or a plurality of bits indicated by the PEI are used to indicate a plurality of paging grouping resources. The PEI may be in a format of DCI.

In an embodiment, if a network does not send the paging group information to the UE, the UE selects a preset group. In another embodiment, if the network does not send the paging group information to the UE, a preset paging grouping resource is determined as a paging grouping resource of the UE. The preset paging grouping resource may be a public paging resource.

No matter which paging grouping mode is used, the UE and the network (including a base station and a core network) need to agree on a group in which the UE is located before the paging message can be sent to the UE normally.

In an embodiment, the UE and the network can use the following two types of paging grouping modes. The first type is a network-assigned paging grouping mode. For example, the network sends the paging grouping information to the UE. The second type is a UE-identifier (ID)-based paging grouping mode. The UE-ID-based paging grouping mode can be implemented by the following equation: $wg = floor \left(floor\left(\frac{UE_ID}{N \times {N}_{s}}\right)/{N}_{n}\right) mod {N}_{W} ,$ in which, wg is a selected paging grouping resource, UE_ID represents the paging group in which the UE is located, N is a density of paging frames on a time domain, and Nₛ is a density of paging within a paging frame on the time domain, Nₙ is a paging narrow band; and N_{w} is a total number of paging grouping resources of the UE_ID paging group. In an embodiment, the UE-ID-based paging grouping mode is also referred to as a random mode or a UE-ID modulus mode.

In this way, the UE, the base station, and the core network device achieve consistency in acknowledging the group of the UE.

As illustrated in FIG. 2, an embodiment of the disclosure provides an information processing method, which is performed by a base station. The method includes the following steps.

At step S21, first information is sent, in which the first information is configured to determine a paging grouping mode supported by the base station, and/or, the first information is configured to determine a mapping relation between a paging group determined by the paging grouping mode supported by the base station and a paging grouping resource.

The processing method provided by embodiments of the disclosure may be performed by a base station. The base station may be various types of base stations, such as, a 2G base station, a 3G base station, a 4G base station, a 5G base station, or any other gNB.

The method provided by embodiments of the disclosure may also be performed by other network devices of a network, such as, other access network devices or core network devices. When the information processing method is performed by a core network device, the core network device sends the first information to the base station, and the base station forwards the first information.

The core network device may be a variety of physical or logical entities, for example, it may be a MME or a SGW.

In an embodiment, the base station informs the UE of the paging grouping mode supported by the base station, so that the UE can be aware of the paging grouping mode and determine the paging group based on the paging grouping mode. For the network-assigned paging grouping mode, based on the mapping relation between the paging group and the paging grouping resource issued by the base station, the UE can accurately know the paging grouping resource of the paging group in which the UE is located based on the mapping relation. For the UE-ID-based paging grouping mode, a modulus operation is performed for the paging grouping resource based on the UE-ID modulus mode, so that the UE can accurately know the paging grouping resource of the paging group in which the UE is located.

In an embodiment, the base station informs the UE of the mapping relation between the paging group determined by the paging grouping mode supported by the base station and the paging grouping resource, so that the UE can know the mapping relation between the paging group determined by the paging grouping mode and the paging grouping resource, and accurately learn the paging grouping resource corresponding to the paging group in which the UE is located based on the mapping relation.

In an embodiment, the above step S21 may also be: sending first information, in which the first information is configured to determine a mapping relation between the paging grouping mode supported by the base station and the paging grouping resource. The mapping relation between the paging grouping mode supported by the base station and the paging grouping resource includes: the paging grouping mode supported by the base station, and the mapping relation between the paging group determined by the paging grouping mode and the paging grouping resource. In this way, the UE can be aware of the paging grouping mode adopted by the base station, so that the UE can determine the paging group of the UE based on the paging grouping mode. Moreover, the UE can accurately know the paging grouping resource corresponding to the paging group in which the UE is located based on the mapping relation between the paging group determined by the paging grouping mode and the paging grouping resource.

Embodiments of the disclosure provide an information processing method, which is performed by a base station. The method may include: sending first information to a UE.

The UE may be a variety of mobile terminals. For example, the UE includes, but is not limited to, a cell phone, a computer, a server, a wearable device, a game control platform, or a multimedia device, etc.

In some possible implementations, the base station sends the first information for determining a paging grouping mode supported by the base station to the UE. The UE can determine a mapping relation between a paging group and a paging grouping resource according to a pre-configuration or a communication protocol. The UE can determine a paging grouping resource according to the paging grouping mode supported by the base station, and the mapping relation between the paging group and the paging grouping resource. That is, the method includes: the base station sending the first information for determining the paging grouping mode supported by the base station to the UE, so that the UE can determine the paging grouping resource according to the first information, and the mapping relation between the paging group and the paging grouping resource determined according to the pre-configuration or the communication protocol.

In some possible implementations, the base station sends the first information for determining the paging grouping mode supported by the base station, and relation information for indicating the mapping relation between the paging group and the paging grouping resource to the UE, separately or simultaneously. So that, the UE can determine the paging grouping resource according to the paging grouping mode in the received first information and the mapping relation between the paging group and the paging grouping resource indicated by the relation information. The relation information for indicating the mapping relation between the paging group and the paging grouping resource can be sent either by the first information or by any other messages.

Embodiments of the disclosure provide an information processing method, which is performed by a base station. The method may include: sending first information to a UE, in which the first information is configured to determine a paging grouping resource.

In the information processing method provided by embodiments of the disclosure, sending the first information may include: broadcasting the first information. In an embodiment, the base station broadcasts a system message that carries the first information. In this way, all UEs in a cell can receive the first information, thereby saving the signaling overhead.

In the information processing method provided by embodiments of the disclosure, sending the first information may include: the base station sending the first information by any other achievable means. For example, the first information may be sent to the UE by carrying the first information in a message such as a DCI, a PEI, and the like.

In an implementation, the information processing method provided by embodiments of the disclosure may include: sending paging grouping resource information.

In an implementation, the information processing method provided by embodiments of the disclosure may include: sending paging group information and paging grouping resource information.

The paging group information indicates the paging group. A paging grouping mode used for the paging group is the paging grouping mode supported by the base station. The paging grouping resource information indicates a paging grouping resource assigned to the paging group indicated by the paging group information.

If the base station sends the paging group information, the UE at least knows the paging group of the UE based on the paging grouping mode. If the base station sends the paging grouping resource information, the UE at least knows the paging grouping resource configured by the network.

In an embodiment, the mapping relation between the paging group and the paging grouping resource may be that one paging group maps to one or more paging grouping resources. For example, as shown in Table 1 below, 3 paging groups (i.e., paging group 1, paging group 2 and paging group 3, respectively) in which all UEs are located are assigned by the network, and 5 paging grouping resources (paging grouping resource 1, paging grouping resource 2, paging grouping resource 3, paging grouping resource 4 and paging grouping resource 5, respectively) are assigned by the network. Paging group 1 maps to paging grouping resources 1 and 2, paging group 2 maps to paging grouping resources 3 and 4, and paging group 3 maps to paging grouping resource 5. In the table, the paging grouping resource can also be named as: a PEI subgroup or a PEI group.

**Table 1**

| paging group | paging grouping resource |
|---|---|
| paging group 1 | paging grouping resources 1 and 2 |
| paging group 2 | paging grouping resources 3 and 4 |
| paging group 3 | paging grouping resource 5 |

In an embodiment, the mapping relation between the paging group and the paging grouping resource may be that multiple paging groups map to one or more paging grouping resources. For example, as shown in Table 2 below, 6 paging groups in which the UE is located are assigned by the network, which are paging group 1, paging group 2, paging group 3, paging group 4, paging group 5 and paging group 6, and 5 paging grouping resources are assigned by the network, i.e., paging grouping resource 1, paging grouping resource 2, paging grouping resource 3, paging grouping resource 4 and paging grouping resource 5. Paging groups 1 and 2 map to paging grouping resources 1 and 2, paging groups 3 and 4 map to paging grouping resource 3, paging groups 5 and 6 map to paging grouping resource 5. Certainly, the mapped paging grouping resources can be overlapped. For example, in Table 2, paging groups 3 and 4 may map to paging grouping resources 1, 2, 3 and 4.

**Table 2**

| paging group | paging grouping resource |
|---|---|
| paging groups 1 and 2 | paging grouping resources 1 and 2 |
| paging groups 3 and 4 | paging grouping resources 3 and 4 |
| paging groups 5 and 6 | paging grouping resource 5 |

It is understood that each element in Table 1 or Table 2 above exists independently and are exemplarily listed in the same table, but it does not mean that all of the elements shown in the table must exist at the same time as shown in the table. The value of each of these elements is independent of any other element value in Table 1 or Table 2. Therefore, those skilled in the art can understand that the value of each element in the Table 1 or Table 2 is an independent embodiment.

In an embodiment, the paging grouping mode includes at least one of: a network-assigned paging grouping mode and a UE-ID-based paging grouping mode.

For example, the base station may implicitly or explicitly indicate the UE that the base station supports the network-assigned paging grouping mode. The explicit indication means that the base station indicates through an information element (IE) corresponding to an explicit indicator or an explicit signaling. The implicit indication may be exemplarily as follows. If the first information sent by the base station includes the relation information for indicating the mapping relation between the paging group and the paging grouping resource, the first information may be used to determine that the base station supports the network-assigned paging grouping mode. In this way, through the sending of the first information, the UE is notified that the base station supports the network-assigned paging grouping mode.

For example, the base station may implicitly or explicitly indicate the UE that the base station supports the network-assigned paging grouping mode and the UE-ID-based paging grouping mode. The explicit indication means that the base station indicates through an IE corresponding to an explicit indicator or an explicit signaling. The implicit indication may exemplarily as follows. If the first information sent by the base station includes the relation information for indicating the mapping relation between the paging group and the paging grouping resource, the first information may be used to determine that the base station supports the network-assigned paging grouping mode and the UE-ID-based paging grouping mode. In this way, through the sending of the first information, the UE is notified that the base station supports the network-assigned paging grouping mode and the UE-ID-based paging grouping mode. In some possible implementations, supporting the network-assigned paging grouping mode may implicitly indicate supporting the UE-ID-based paging grouping mode. Certainly, different ways and different signaling can be used to indicate whether the base station supports the network-assigned paging grouping mode and whether the base station supports the UE-ID-based paging grouping mode.

For example, the base station may implicitly or explicitly indicate the UE that the base station does not support the network-assigned paging grouping mode. The explicit indication means that the base station indicates through an IE corresponding to an explicit indicator or an explicit signaling. The implicit indication may be exemplarily as follows. If the first information sent by the base station includes the paging grouping resource information, the first information can be used to determine that the base station does not support the network-assigned paging grouping mode. In this way, through the sending of the first information, the UE is notified that the base station does not support the network-assigned paging grouping mode.

For example, the base station may implicitly or explicitly indicate the UE whether the base station supports the network-assigned paging grouping mode and whether the base station supports the UE-ID-based paging grouping mode. The explicit indication means that the base station indicates through an explicit indicator or an explicit specific signaling. The implicit indication may be exemplarily as follows. If the first information sent by the base station includes the paging grouping resource information but does not include the mapping relation between the paging group and the paging grouping resource, the first information can be used to determine that the base station does not support the network-assigned paging grouping mode but supports the UE-ID-based paging grouping mode, which means that the UE can obtain the paging group and the corresponding paging grouping resource by adopting a UE-ID modulus mode. For example, the base station broadcasts 10 paging grouping resources without providing a mapping relation between paging groups and the paging grouping resources. This means that the UE can determine the paging group and the corresponding paging grouping resource by using the UE-ID modulus mode. In this way, through the sending of the first information, the UE is notified that the base station does not support the network-assigned paging grouping mode. Certainly, the base station can indicate, simultaneously or separately, whether the base station supports the network-assigned paging grouping mode and whether the base station supports the UE-ID-based paging grouping mode.

For example, if the first information sent by the base station does not include the paging grouping resource information, the first information can be used to determine that the base station neither supports the network-assigned paging grouping mode nor the UE-ID-based paging grouping mode. In this way, through the sending of the first information, the UE is notified that the base station neither supports the network-assigned paging grouping mode nor the UE-ID-based paging grouping mode. Therefore, the UE does not need to perform paging grouping, and the UE can perform paging monitoring on a default paging resource. Certainly, the base station may indicate, simultaneously or separately, whether the base station supports the network-assigned paging grouping mode and whether the base station supports the UE-ID-based paging grouping mode.

In embodiments of the disclosure, the first information is sent by the base station. The first information is configured to determine the paging grouping mode supported by the base station, and/or, the first information is configured to determine the mapping relation between the paging group determined by the paging grouping mode supported by the base station and the paging grouping resource. In embodiments of the disclosure, the base station informs the UE of the paging grouping mode supported by the base station and/or the mapping relation between the paging group determined by the paging grouping mode supported by the base station and the paging grouping resource. In this way, in embodiments of the disclosure, the UE can accurately know the paging grouping mode supported by the base station. Moreover, if the first information is used to determine the mapping relation between the paging group determined by the paging grouping mode supported by the base station and the paging grouping resource, the UE can determine the mapping relation between the paging group and the paging grouping resource, so that the UE can learn the paging grouping mode supported by the base station and the paging grouping resource for monitoring paging based on the mapping relation at a time, which has the characteristic of small signaling overhead.

In embodiments of the disclosure, the UE may determine a paging grouping mode corresponding to a paging group in which the UE is located based on the mapping relation between the paging group and the paging grouping mode. In this way, the UE can accurately determine on which paging grouping resource information the paging monitoring is performed, thereby increasing a probability of normally paging the UE, and saving the power consumption of the UE.

It is noted that those skilled in the art may understand that the methods provided by the embodiments of the disclosure may be performed alone or in combination with some of the methods in the embodiments of the disclosure or some of the methods in the related art.

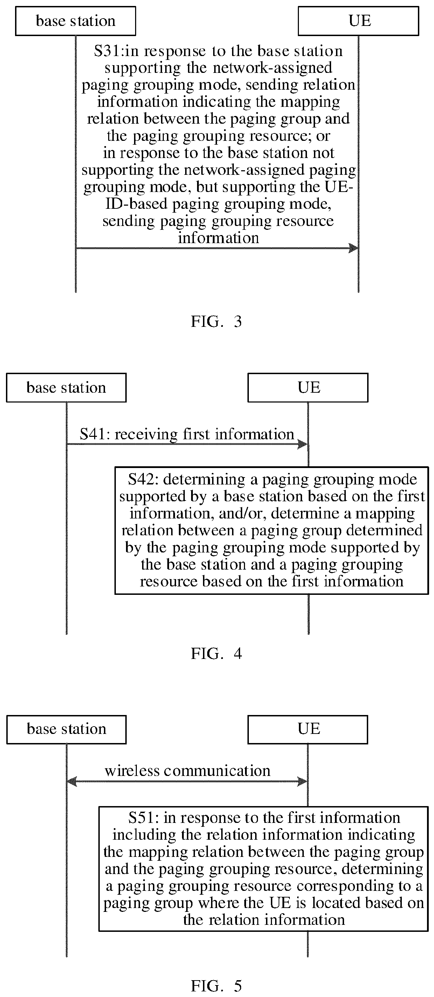

As illustrated in FIG. 3, an embodiment of the disclosure provides an information processing method, which is performed by a base station. The method includes the following steps.

At step S31, in response to the base station supporting the network-assigned paging grouping mode, relation information indicating a mapping relation between a paging group and a paging grouping resource is sent; or, in response to the base station not supporting the network-assigned paging grouping mode, but supporting the UE-ID-based paging grouping mode, paging grouping resource information is sent.

In some of the embodiments of the disclosure, the paging grouping mode may be a paging grouping mode in any of the above embodiments.

The information processing method provided by embodiments of the disclosure and performed by a base station, includes: in response to the base station supporting the network-assigned paging grouping mode, but not supporting the UE-ID-based paging grouping mode, sending the relation information indicating the mapping relation between the paging group and the paging grouping resource.

For example, the base station supporting the network-assigned paging grouping mode, but not supporting the UE-ID-based paging grouping mode, may include: if the mapping relation between the paging group and the paging grouping resource is that one or more paging groups map to one paging grouping resource, the base station supporting the network-assigned paging grouping mode, but not supporting the UE-ID-based paging grouping mode.

**In** this way, in embodiments of the disclosure, if the mapping relation between the paging group and the paging grouping resource is that one or more paging groups map to one paging grouping resource, the base station can determine that the base station supports the network-assigned paging grouping mode, but does not support the UE-ID-based paging grouping mode based on the mapping relation between the paging group and the paging grouping resource. In this case, a UE that does not obtain a paging group from the network may directly use a default paging grouping or a default paging grouping resource, such as the public paging resource.

The information processing method provided by embodiments of the disclosure and performed by a base station, includes: in response to the base station supporting the network-assigned paging grouping mode and the UE-ID-based paging grouping mode, sending the relation information indicating the mapping relation between the paging group and the paging grouping resource.

For example, the base station supporting the network-assigned paging grouping mode and the UE-ID-based paging grouping mode, may include: if the mapping relation between the paging group and the paging grouping resource is that one or more paging groups map to multiple paging grouping resources, the base station supporting the network-assigned paging grouping mode and the UE-ID-based paging grouping mode.

**In** this way, in embodiments of the disclosure, if the mapping relation between the paging group and the paging grouping resource is that one or more paging groups map to multiple paging grouping resources, the base station can determine that the base station supports the network-assigned paging grouping mode and the UE-ID-based paging grouping mode, based on the mapping relation between the paging group and the paging grouping resource. There are multiple paging grouping resources after determining a paging group. Thus, a paging grouping mode is used to select a paging grouping resource from the multiple paging grouping resources, for example, by using the UE-ID modulus mode. Therefore, at this time, it is implicitly indicated that the base station supports the UE-ID-based paging grouping mode.

In an embodiment, step S21 includes at least one of:
in response to the base station supporting the network-assigned paging grouping mode, sending relation information indicating the mapping relation between the paging group and the paging grouping resource; or
in response to the base station not supporting the network-assigned paging grouping mode, but supporting the UE-ID-based paging grouping mode, sending the paging grouping resource information.

In an embodiment, in response to the base station supporting the network-assigned paging grouping mode, sending the relation information indicating the mapping relation between the paging group and the paging grouping resource includes at least one of:
in response to the base station supporting the network-assigned paging grouping mode, but not supporting the UE-ID-based paging grouping mode, sending the relation information indicating the mapping relation between the paging group and the paging grouping resource; or
in response to the base station supporting the network-assigned paging grouping mode and the UE-ID-based paging grouping mode, sending the relation information indicating the mapping relation between the paging group and the paging grouping resource.

In embodiments of the disclosure, the base station can send different types of first information (e.g., the relation information indicating the mapping relation between the paging group and the paging grouping resource, or the paging grouping resource information) when the base station supports different paging grouping modes, so that the UE knows, based on the received first information, the paging grouping mode supported by the base station, and the mapping relation between the paging group determined by the paging grouping mode and the paging grouping resource. In this way, the UE can accurately determine the paging grouping resource corresponding to the paging group in which the UE is located based on the first information, which improves the probability of the UE monitoring a paging message normally, and reduces the power consumption of the UE.

The information processing method provided by embodiments of the disclosure and performed by a base station, includes: in response to the base station neither supporting the network-assigned paging grouping mode nor supporting the UE-ID-based paging grouping mode, not sending the paging grouping resource information.

For example, if the base station determines that the base station neither supports the network-assigned paging grouping mode nor the UE-ID-based paging grouping mode, the base station sends the paging group information but does not send the paging grouping resource information, or the base station neither sends the paging group information nor the paging grouping resource information. In this way, the UE can learn that the base station neither supports the network-assigned paging grouping mode nor the UE-ID-based paging grouping mode.

It is noted that those skilled in the art may understand that the methods provided by the embodiments of the disclosure may be performed alone or in combination with some of the methods in the embodiments of the disclosure or some of the methods in the related art.

The following information processing method is performed by a UE, which is similar to the description of the information processing method performed by the base station as described above. Technical details not disclosed in the embodiments of the information processing method performed by the UE can refer to the description of the examples of the information processing method performed by the base station, which will not be described and illustrated in detail herein.

As illustrated in FIG. 4, an embodiment of the disclosure provides an information processing method, which is performed by the UE. The method includes the following steps.

At step S41, first information is received.

At step S42, a paging grouping mode supported by a base station is determined based on the first information, and/or, a mapping relation between a paging group determined by the paging grouping mode supported by the base station and a paging grouping resource is determined based on the first information.

In the above embodiments, step S42 may include: determining the paging grouping resource determined by the base station based on first information, and/or, determining the mapping relation between the paging group supported by the base station and the paging grouping resource based on the first information.

In some possible embodiments in the embodiments of the disclosure, the first information is the first information in step S21, and the paging grouping mode may be the paging grouping mode in step S21.

In an embodiment, step S42 may include: determining the paging grouping mode supported by the base station based on the first information.

In another embodiment, step S42 may include: determining the mapping relation between the paging group determined by the paging grouping mode supported by the base station and the paging grouping resource based on the first information.

In an embodiment, step S42 may include: determining a paging grouping resource supported by the base station based on the first information.

In another embodiment, step S42 may include: determining the paging grouping mode supported by the base station, and determining the mapping relation between the paging group determined by the paging grouping mode supported by the base station and the paging grouping resource based on the first information.

In an embodiment, step S42 may include: determining a mapping relation between the paging grouping mode supported by the base station and a paging grouping resource based on the first information. The mapping relation between the paging grouping mode supported by the base station and the paging grouping resource includes: the paging grouping mode supported by the base station, and the mapping relation between the paging group determined by the paging grouping mode supported by the base station and the paging grouping resource.

With respect to the above embodiments reference can be made to the description of the base station side, which will not be repeated here.

In the above embodiments, step S41 may include: receiving the first information sent by the base station or a network device. Receiving the first information sent by the network device may be as following. The network device (e.g., a core network or a network side device) sends the first information to the base station, and the base station forwards the first information to the UE. Or, the step S41 may include: receiving the first information broadcasted by the base station.

In some possible implementations, the UE receives first information for determining a paging grouping mode sent by the base station. The UE can determine a mapping relation between a paging group and a paging grouping resource according to a pre-configuration or a communication protocol. Therefore, the UE can determine a paging grouping resource according to the paging grouping mode in the received first information, and the mapping relation between the paging group and the paging grouping resource.

In some possible implementations, the UE receives first information for determining the paging grouping mode supported by the base station, and relation information indicating the mapping relation between the paging group and the paging grouping resource sent separately or simultaneously by the base station. The UE can determine a paging grouping resource according to the paging grouping mode in the received first information, and the mapping relation between the paging group and the paging grouping resource indicated in the relation information. The relation information indicating the mapping relation between the paging group and the paging grouping resource can be sent through the first information or through any other messages.

The information processing method provided by embodiments of the disclosure and performed by the UE may further include: receiving first information, in which the first information includes paging grouping resource information.

The information processing method provided by embodiments of the disclosure and performed by the UE may further include: receiving first information, in which the first information includes paging group information and paging grouping resource information, and the first information may also include: relation information indicating the mapping relation between the paging group and the paging grouping resource.

The paging group information indicates the paging group. A paging grouping mode adopted by the paging group is the paging grouping mode supported by the base station. The paging grouping resource information indicates a paging grouping resource assigned to the paging group indicated by the paging group information.

In an embodiment, the mapping relation between the paging group and the paging grouping resource includes: one paging group mapping to one or more paging grouping resources, or, a plurality of paging groups mapping to one or more paging grouping resources. For details, reference may be made to the description of the base station side, which will not be repeated herein.

The information processing method provided by embodiments of the disclosure and performed by the UE may include: receiving relation information indicating the mapping relation between the paging group and the paging grouping resource. The mapping relation between the paging group and the paging grouping resource includes: one paging group mapping to one or more paging grouping resources, or, a plurality of paging groups mapping to one or more paging grouping resources.

In an embodiment, the paging grouping mode includes at least one of: a network-assigned paging grouping mode and a UE-ID-based paging grouping mode.

In an embodiment, step S42 includes: in response to receiving an explicit indication or an implicit indication, determining whether the base station supports the network-assigned paging grouping mode, or, determining that the base station does not support the network-assigned paging grouping mode, or, determining that the base station does not support the network-assigned paging grouping mode but supports the UE-ID-based paging grouping mode, or, determining that the base station neither supports the network-assigned paging grouping mode nor the UE-ID-based paging grouping mode.

In a possible implementation, the explicit indication means that the base station indicates through an IE corresponding to an explicit indicator or an explicit a signaling.

In a possible implementation, step S42 includes at least one of:
in response to the first information including relation information indicating the mapping relation between the paging group and the paging grouping resource, determining that the base station supports the network-assigned paging grouping mode;
in response to the first information including the paging grouping resource information, determining that the base station does not support the network-assigned paging grouping mode;
in response to the first information including the paging grouping resource information, determining that the base station does not support the network-assigned paging grouping mode but supports the UE-ID-based paging grouping mode; and
in response to the first information not including the paging grouping resource information, determining that the base station neither supports the network-assigned paging grouping mode nor the UE-ID-based paging grouping mode.

In an embodiment, in response to the first information including the relation information indicating the mapping relation between the paging group and the paging grouping resource, determining that the base station supports the network-assigned paging grouping mode, includes at least one of:
in response to the first information including the relation information indicating the mapping relation between the paging group and the paging grouping resource, determining that the base station supports the network-assigned paging grouping mode but does not support the UE-ID-based paging grouping mode, in which the mapping relation between the paging group and the paging grouping resource is that one paging group or multiple paging groups map to one paging grouping resource; and
in response to the first information including the relation information indicating the mapping relation between the paging group and the paging grouping resource, determining that the base station supports both the network-assigned paging grouping mode and the UE-ID-based paging grouping mode, in which the mapping relation between the paging group and the paging grouping resource is that one paging group or multiple paging groups map to one or more paging grouping resources.

It is noted that those skilled in the art may understand that the methods provided by the embodiments of the disclosure may be performed alone or in combination with some of the methods in the embodiments of the disclosure or some of the methods in the related art.

The method includes: in response to the first information including the relation information indicating the mapping relation between the paging group and the paging grouping resource, determining that the base station supports the network-assigned paging grouping mode.

As illustrated in FIG. 5, an embodiment of the disclosure provides an information processing method, which is performed by a UE. The method includes the following steps.

At step S51, in response to the first information including the relation information indicating the mapping relation between the paging group and the paging grouping resource, a paging grouping resource corresponding to a paging group where the UE is located is determined based on the relation information.

The information processing method provided by embodiments of the disclosure and performed by the UE may include: in response to the first information including the relation information indicating the mapping relation between the paging group and the paging grouping resource, and the relation information including paging group information of the paging group where the UE is located, determining the paging grouping resource corresponding to the paging group where the UE is located based on the relation information.

The information processing method provided by embodiments of the disclosure and performed by the UE may include: in response to the first information including the relation information indicating the mapping relation between the paging group and the paging grouping resource, and the relation information including the paging group information of the paging group where the UE is located, if the mapping relation is determined to be that one paging group or multiple paging groups map to one paging grouping resource, determining the paging grouping resource used by the paging group in which the UE is located based on the relation information.

For example, the relation information included in the first information received by the UE is that paging group 1 maps to paging grouping resource 1, paging group 2 or 3 maps to paging grouping resource 2, and paging group 3 maps to paging grouping resource 3. If the paging group in which the UE is located is paging group 1, it is determined that the relation information provided by the base station includes the paging group information of the paging group in which the UE is located. If the UE determines that the mapping relation in the relation information is that one paging group or multiple paging groups map to one paging grouping resource, the UE may determine, based on the paging group 1 in which the UE is located and the mapping relation, that the paging grouping resource corresponding to paging group 1 where the UE is located is paging grouping resource 1.

The information processing method provided by embodiments of the disclosure and performed by the UE may include: in response to the first information including the relation information indicating the mapping relation between the paging group and the paging grouping resource, and the relation information including the paging group information of the paging group where the UE is located, if the mapping relation is that one paging group or multiple paging groups map to multiple paging grouping resources, determining multiple paging grouping resources mapping to the paging group where the UE is located based on the relation information; and selecting a paging grouping resource from the multiple paging grouping resources as the paging grouping resource corresponding to the paging group where the UE is located based on the UE-ID-based paging grouping mode.

For example, the relation information included in the first information received by the UE is that paging group 1 maps to paging grouping resources 1 and 2, paging group 2 or 3 maps to paging grouping resource 3 or 4, and paging group 3 maps to paging grouping resource 5 or 6. If the paging group in which the UE is located is paging group 1, it is determined that the relation information provided by the base station includes the paging group information of the paging group in which the UE is located. If the UE determines that the mapping relation included in the relation information is that one or more paging groups map to multiple paging grouping resources, the UE may determine, based on the paging group 1 in which the UE is located and the mapping relation, that the paging grouping resources for paging group 1 are paging grouping resources 1 and 2. Based on the UE-ID-based paging grouping mode, i.e., according to the equation: $wg = floor \left(floor\left(\frac{UE_ID}{N \times {N}_{s}}\right)/{N}_{n}\right) mod {N}_{W} ,$ a paging grouping resource (wg) is selected from the paging grouping resources 1 and 2 as the paging grouping resource used by the paging group in which the UE is located. N_{w} is a total number of paging grouping resources of the paging group in which the UE is located, which is 2 in this example. For example, the determined paging resource (wg) may be paging resource 1.

In embodiments of the disclosure, if the UE determines that the first information includes the relation information indicating the mapping relation between the paging group and the paging grouping resource, it is determined whether the relation information includes the paging group information of the paging group in which the UE is located. If yes, it is determined whether the mapping relation included in the relation information is that one paging group or multiple paging groups map to one paging grouping resource. If it is that one paging group or multiple paging groups map to one paging grouping resource, the paging grouping resource used by the paging group in which the UE is located can be directly determined based on the mapping relation. Or, if it is that one paging group or multiple paging groups map to multiple paging grouping resources, multiple paging grouping resources used by the paging group in which the UE is located may be determined based on the mapping relation, and then one paging grouping resource is determined, based on the UE-ID-based paging grouping mode, from the multiple paging grouping resources as the paging grouping resource of the paging group in which the UE is located, thus the UE can also accurately determine the paging grouping resource used by the paging group in which the UE is located. Therefore, in embodiments of the disclosure, the UE can learn the paging grouping mode supported by the base station and the paging grouping resource for monitoring paging at a time based on the mapping relation, which has the characteristic of small signaling overhead.

Moreover, the embodiments of the disclosure may enable the UE and the base station to achieve consistency in paging monitoring, to improve the probability of monitoring a paging message normally. There is no need for the UE to wake up all the time to monitor paging, the UE can monitor paging only at a suitable paging grouping resource, thereby saving the power consumption of the UE.

The information processing method provided by embodiments of the disclosure and performed by the UE include: in response to the first information including the relation information indicating the mapping relation between the paging group and the paging grouping resource, and the relation information not including the paging group information of the paging group where the UE is located, determining the paging grouping resource information of the paging group in which the UE is located based on the relation information and the UE-ID-based paging grouping mode.

The information processing method provided by embodiments of the disclosure and performed by the UE include: in response to the first information including the relation information indicating the mapping relation between the paging group and the paging grouping resource, and the relation information not including the paging group information of the paging group where the UE is located, determining a preset group as the paging group where the UE is located; and determining the paging grouping resource mapping to the paging group in which the UE is located based on a paging grouping resource of the preset group. The preset group may be a paging group included in the relation information, or may be a default paging group or a configured paging grouping. The default paging group may be a paging group negotiated between the base station and the UE. The default paging group may be a paging group included in the relation information, or a paging group that is not included in the relation information. The configured paging group may be a paging group that is not included in the relation information. A paging grouping resource mapping to the configured paging group can be a paging grouping resource not included in the relation information.

In an embodiment, determining the paging grouping resource of the paging group in which the UE is located based on the paging grouping resource mapping to the preset group includes at least one of:
in response to the preset group mapping to one paging grouping resource, determining the paging grouping resource mapping to the preset group as the paging grouping resource of the paging group in which the UE is located; and
in response to the preset group mapping to multiple paging grouping resources, determining one paging grouping resource from the multiple paging grouping resources as the paging grouping resource of the paging group in which the UE is located based on the UE-ID-based paging grouping mode.

For example, the relation information included in the first information received by the UE includes that paging group 1 maps to paging grouping resource 1, paging group 2 or 3 maps to paging grouping resource 2, and paging group 3 maps to paging grouping resource 3. If the paging group in which the UE is located is none of paging group 1, paging group 2, or paging group 3, it is determined that the relation information provided by base station does not include the paging group in which the UE is located. The UE may determine a paging group from the relation information. For example, the UE may determine paging group 1 as the preset group, and then determine that the paging grouping resource of the paging group in which the UE is located is the paging grouping resource mapping to the preset group, i.e., paging grouping resource 1.

In the above example, if it is determined that the relation information provided by the base station does not include the paging group in which the UE is located, the UE may configure a preset group, i.e., paging group 4. A paging grouping resource mapping to the paging group 4 can be a paging grouping resource other than paging grouping resources 1-3 in the relation information. If the UE receives 6 paging grouping resources broadcasted by the base station, i.e., paging grouping resources 1-6, respectively, the UE can determine that the paging grouping resource mapping to the paging group 4 is part of or all of the paging grouping resources 4-6. If the UE determines that the paging grouping resources of the paging group are paging grouping resources 4-6, the UE can determine the paging grouping resource used by the paging group in which the UE is located by selecting a paging grouping resource (wg) from the paging grouping resources 4-6 based on the UE-ID-based paging grouping mode, i.e., according to the equation: $wg = floor \left(floor\left(\frac{UE_ID}{N \times {N}_{s}}\right)/{N}_{n}\right) mod {N}_{W} ,$ in which, N_{w} is a total number of paging grouping resources of the paging group in which the UE is located, i.e., 3. For example, the determined paging resource (wg) may be paging resource 5.

In embodiments of the disclosure, if the UE determines that the first information includes the relation information indicating the mapping relation between the paging group and the paging grouping resource, the UE may determine whether the relation information includes the paging group information of the paging group in which the UE is located. If not, the UE may determine the preset group. For example, a paging group included in the relation information or a paging group not included in the relation information may be determined as the preset group. The paging grouping resource of the paging group in which the UE is located is determined according to the fact whether the preset group maps to one or more paging grouping resources. If the preset group maps to one paging grouping resource, the paging grouping resource is determined to be the paging grouping resource used by the paging group in which the UE is located. Or, if the preset group maps to multiple paging grouping resources, a paging grouping resource is determined from the multiple paging grouping resources as the paging grouping resource of the paging group where the UE is located according to the UE-ID-based paging grouping mode. In this way, in embodiments of the disclosure, when the relation information does not include the paging group in which the UE is located, the paging group of the UE is determined as the preset group, and then a suitable paging grouping resource used by the paging group in which the UE is located is determined based on the paging grouping resource of the preset group. Therefore, the UE can learn the paging grouping mode supported by the base station and the paging grouping resource for monitoring paging based on the mapping relation at a time, which has the characteristic of small signaling overhead.

Moreover, the embodiments of the disclosure may enable the UE and the base station to achieve consistency in paging monitoring, to improve the probability of monitoring a paging message normally. There is no need for the UE to wake up all the time to monitor paging, the UE can monitor paging only at a suitable paging grouping resource, thereby saving the power consumption of the UE.

It is noted that those skilled in the art may understand that the methods provided by the embodiments of the disclosure may be performed alone or in combination with some of the methods in the embodiments of the disclosure or some of the methods in the related art.

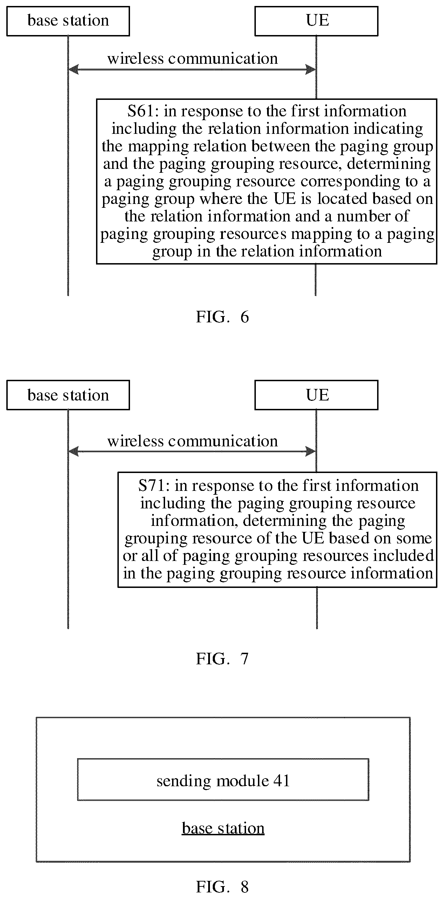

As illustrated in FIG. 6, an embodiment of the disclosure provides an information processing method, which is performed by a UE. The method includes the following steps.

At step S61, in response to the first information including the relation information indicating the mapping relation between the paging group and the paging grouping resource, the paging grouping resource corresponding to the paging group where the UE is located is determined based on the relation information and a number of paging grouping resources mapping to a paging group in the relation information.

The information processing method provided by embodiments of the disclosure and performed by the UE include: in response to the first information including the relation information indicating the mapping relation between the paging group and the paging grouping resource, and one or more paging groups mapping to one paging grouping resource, determining the paging grouping resource of the paging group in which the UE is located based on the relation information and the paging group in which the UE is located.

For example, the relation information included in the first information received by the UE is that paging group 1 maps to paging grouping resource 1, paging group 2 or 3 maps to paging grouping resource 2, and paging group 3 maps to paging grouping resource 3. It is determined that the mapping relation in the relation information is that one paging group maps to one paging grouping resource. If the paging group in which the UE is located is paging group 1, it is determined that the relation information provided by the base station includes the paging group information of the paging group in which the UE is located. The UE may determine a paging grouping resource of the paging group 1 as paging grouping resource 1 based on the paging group 1 in which the UE is located and the mapping relation.

In the above examples, if the paging group in which the UE is located is none of paging group 1, 2, or 3, it is determined that the relation information provided by the base station does not include the paging group information of the paging group in which the UE is located. The UE determines that the paging group is not included in the relation information, and the UE uses the default paging resource for paging. The default paging resource may be a paging resource provided by the base station.

The information processing method provided by embodiments of the disclosure and performed by the UE include: in response to the first information including the relation information indicating the mapping relation between the paging group and the paging grouping resource, and the relation information indicating that one or more paging groups map to multiple paging grouping resources, determining the paging grouping resource of the paging group in which the UE is located based on the relation information and the UE-ID-based paging grouping mode.

In embodiments of the disclosure, if the UE determines that the first information includes the relation information indicating the mapping relation between the paging group and the paging grouping resource, it may be determined whether the mapping relation in the relation information is that one or more paging groups map to one paging grouping resource. If yes, it is further determined whether the relation information includes the paging group information of the paging group in which the UE is located, and if yes, the UE can accurately determine the paging grouping resource used by the paging group in which the UE is located directly based on the mapping relation, otherwise, the UE uses the default paging resource as the paging resource of the UE. Or, if the mapping relation in the relation information is that one or more paging groups map to multiple paging grouping resources, is determined whether the paging group information of the paging group in which the UE is located is included in the relation information. If yes, the UE determines the paging grouping resource of the paging group where the UE is located based on the relation information and the UE-ID-based paging grouping mode, otherwise, the UE determines the preset group as the paging group in which the UE is located and then determines the paging grouping resource of the paging group in which the UE is located based on the preset group and/or the UE-ID-based paging grouping mode. In this way, in embodiments of the disclosure, the UE can determine a suitable paging grouping resource for the paging group where the UE is located. Therefore, the UE can learn the paging grouping mode supported by the base station and the paging grouping resource for monitoring paging based on the mapping relation at a time, which has the characteristic of small signaling overhead.

Moreover, the embodiments of the disclosure may enable the UE and the base station to achieve consistency in paging monitoring, to improve the probability of monitoring a paging message normally. There is no need for the UE to wake up all the time to monitor paging, the UE can monitor paging only at a suitable paging grouping resource, thereby saving the power consumption of the UE.

It is noted that those skilled in the art may understand that the methods provided by the embodiments of the disclosure may be performed alone or in combination with some of the methods in the embodiments of the disclosure or some of the methods in the related art.

The information processing method provided by embodiments of the disclosure and performed by the UE include: in response to the first information including the paging grouping resource information, determining that the base station does not support the network-assigned paging grouping mode but supports the UE-ID-based paging grouping mode.

As illustrated in FIG. 7, an embodiment of the disclosure provides an information processing method, which is performed by a UE. The method includes the following steps.

At step S71, in response to the first information including the paging grouping resource information, the paging grouping resource of the UE is determined based on some or all of paging grouping resources included in the paging grouping resource information.

The information processing method provided by embodiments of the disclosure and performed by the UE may include: in response to the first information including the paging grouping resource information, determining a preset group as a paging group in which the UE is located; determining a paging grouping resource of the preset group from some or all of the paging grouping resources included in paging grouping resource information; and determining the paging grouping resource of the UE based on the paging grouping resource mapping to the preset group.

For example, the paging grouping resources indicated by the paging grouping resource information broadcasted by the base station and received by the UE includes: paging grouping resources 1, 2, 3 and 4, the UE may determine that a paging grouping resource used for the UE-ID modulus operation is all or a part of paging grouping resources of paging resources 1-4. For example, the paging grouping resource of the UE-ID modulus operation is determined to be resource grouping resources 1-4, or resource grouping resources 1-2, or resource grouping resources 2, 3 and 4, or resource grouping resource 1. In an embodiment, the paging grouping resource of the UE-ID modulus operation is the paging grouping resource of the preset group.

In this way, in embodiments of the disclosure, if the UE determines that the received first information includes the paging grouping resource information indicating the paging grouping resource, the paging group in which the UE is located may be determined firstly, and then the paging grouping resource of the paging group in which the UE is located may be determined from the paging grouping resources included in the first information. If the paging group where the UE is located maps to one paging grouping resource, the paging grouping resource is directly determined as the paging grouping resource of the paging group where the UE is located. If the paging group where the UE is located maps to multiple paging grouping resources, one of the paging grouping resources is determined as the paging grouping resource of the paging group where the UE is located based on the multiple paging grouping resources and the UE paging grouping mode. In this way, in embodiments of the disclosure, when only the paging grouping resource information is received and the relation information indicating the mapping relation between the paging group and the paging grouping resource is not received, a suitable paging grouping resource for the paging group in which the UE is located can also be obtained, so that the probability of the UE receiving the paging message normally can be improved and the power consumption of the UE can be decreased.

The information processing method provided by embodiments of the disclosure and performed by the UE include: in response to the first information not including the paging grouping resource information, determining a preset paging resource as a paging resource of the UE. In an embodiment, the preset paging resource may include all POs. In embodiments of the disclosure, if the UE does not receive the paging resource information, the UE determines that the base station neither supports the network-assigned paging grouping mode nor the UE-ID-based paging grouping mode. The UE may directly monitoring paging on a relatively large amount of POs, in order to page as many paging messages as possible.

It is noted that those skilled in the art may understand that the methods provided by the embodiments of the disclosure may be performed alone or in combination with some of the methods in the embodiments of the disclosure or some of the methods in the related art.

To further explain any embodiment of the disclosure, a specific embodiment is provided below.

Embodiments of the disclosure provide an information processing method. The method may include the following steps
At step 1, a base station determines a mapping relation between paging groups and paging grouping resources, in which the mapping relation is configured to determine the condition of a paging grouping mode supported by the base station.

The mapping relation between the paging groups and the paging grouping resources may be that one paging group maps to one paging grouping resource or multiple paging grouping resources. Examples of the mapping relation are shown in Table 1.

The mapping relation between the paging groups and the paging grouping resources may also be that multiple paging groups map to one paging grouping resource or multiple paging grouping resources. Examples of the mapping relation are shown in Table 2.

At step 2, the base station broadcasts first information, in which the first information includes relation information indicating the mapping relation between the paging groups and the paging grouping resources, or the first information includes paging grouping resource information.

At step 31: a UE receives the first information. If the UE determines that the first information includes the relation information indicating the mapping relation between the paging groups and the paging grouping resources, the UE determines that the base station supports a network-assigned paging grouping mode, or the UE determines that the base station supports both the network-assigned paging grouping mode and a UE-ID-based paging grouping mode. The UE may also perform the following two actions.

In action 1: the UE determines that the relation information includes a paging group where the UE is located.

If the UE determines that the relation information includes the paging group where the UE is located and the relation information indicating that one or more paging groups map to one paging grouping resource, the UE determines a paging grouping resource of the paging group in which the UE is located based on the relation information.

If the UE determines that the relation information includes the paging group where the UE is located and the relation information indicating that one or more paging groups map to multiple paging grouping resources, the UE determines multiple paging grouping resources of the paging group where the UE is located based on the relation information, and determines one paging grouping resource from the multiple paging grouping resources as the paging grouping resource of the paging group where the UE is located based on a UE-ID modulus mode.

In action 2: the UE determines that the relation information does not include the paging group in which the UE is located or that the UE is not assigned with a paging group by a network.

If the UE determines that the relation information does not include the paging group in which the UE is located or that the UE is not assigned with a paging group by the network, the UE determines a preset group as the paging group in which the UE is located. The preset group may be selected randomly from paging groups included in the relation information, or it may be a default paging grouping or a preset paging group.

If the UE determines that the preset group maps to one paging grouping resource, the UE determines that a paging grouping resource of the preset group is the paging grouping resource of the paging group in which the UE is located.

If the UE determines that the preset group maps to multiple paging grouping resources, the UE determines one paging grouping resource from the multiple paging grouping resources mapping to the preset group as the paging grouping resource of the paging group in which the UE is located, based on the UE-ID modulus mode.

One or more preset groups may be determined as paging groups in which the UE is located. If multiple preset groups are determined as the paging groups in which the UE is located, the UE selects one preset group from the multiple preset groups as a paging group of the UE in accordance with the UE-ID modulus mode, and then determines the paging grouping resource of the paging group in which the UE is located from one or more paging grouping resources napping to the preset group in accordance with the UE-ID modulus mode.

The preset group may be one or more paging groups in the mapping relation between the paging groups and the paging grouping resources broadcasted by the base station, e.g., the paging groups in Table 1 or 2.

The preset group may be a new paging group or a new paging group set. The new paging group or the new paging group set refers to one or more paging groups that are not included in the mapping relation broadcasted by the base station. The paging group set includes multiple paging groups. In an embodiment, the UE selects a portion of the paging grouping resources from the mapping relation between the paging groups and the paging grouping resources broadcasted by the base station to form the paging grouping resource of the preset group. In an embodiment, the UE selects a portion of paging grouping resources that are not used in the mapping relation between the paging groups and the paging grouping resources broadcasted by the base station to form the paging grouping resource of the preset group. For example, if the base station broadcasts 10 paging grouping resources, but only 6 paging grouping resources are used in the mapping relation between the paging groups and the paging grouping resources broadcasted by the base station, the remaining 4 paging grouping resources form the paging grouping resource of the preset group.

At step 32, the UE receives the first information. If the UE determines that the first information includes the relation information indicating the mapping relation between the paging groups and the paging grouping resources, the UE determines that the base station supports the network-assigned paging grouping mode, and determines whether the base station supports the UE-ID-based paging grouping mode based on the number of paging grouping resources mapping to one or more paging groups in the relation information. Determining whether the base station supports the UE-ID-based paging grouping mode includes the following two situations.

In situation 1, if the relation information indicates that one or more paging groups map to one paging grouping resource, it is determined that the base station does not support the UE-ID-based paging grouping mode.

In situation 2, if the relation information indicates that one or more paging groups map to multiple paging grouping resources, it is determined that the base station supports the UE-ID-based paging grouping mode.

The UE may also perform the following actions to determine whether the relation information includes the paging group in which the UE is located.

In action 3, for condition 1, if it is determined that the relation information includes the paging group in which the UE is located, paging resource information of the paging group in which the UE is located is determined based on the relation information. If it is determined that the relation information does not include the paging group in which the UE is located, it is determined that a default paging resource is a paging resource of the UE.

In action 4, for condition 2, if it is determined that the relation information includes the paging group in which the UE is located, the UE determines the multiple paging grouping resources of the paging group in which the UE is located based on the relation information, and determines one paging grouping resource from the multiple paging grouping resources as the paging grouping resource of the paging group in which the UE is located based on the UE-ID modulus mode. If it is determined that the relation information does not include the paging group in which the UE is located, the UE determines the preset group as the paging group in which the UE is located, and determines the paging grouping resource of the paging group in which the UE is located based on the paging grouping resources mapping to the preset group and the UE-ID-based paging grouping mode.

At step S33, the UE receives the first information. If the UE determines that the first information includes the paging grouping resource information, it determines that the base station does not support the network-assigned paging grouping mode but supports the UE-ID-based paging grouping mode. The UE can also perform the following actions.

In action 5, all or a part of the multiple paging grouping resources indicated by the paging grouping resource information are determined as paging grouping resources to be selected for the paging group in which the UE is located. If there is only one paging grouping resource to be selected, this one paging grouping resource is determined as the paging grouping resource of the paging group in which the UE is located. If there are multiple paging grouping resources to be selected, one paging grouping resource is determined from the multiple paging grouping resources to be selected as the paging grouping resource of the paging group in which the UE is located based on the UE-ID modulus mode.

At step S34, the UE receives the first information. If the UE determines that the first information does not include the paging grouping resource information, it determines that the base station neither supports the network-assigned paging grouping mode nor the UE-ID modulus mode.

As illustrated in FIG. 8, embodiments of the disclosure provides an information processing apparatus, which is applied to a base station. The apparatus includes: a sending module 41, configured to send first information, in which the first information is configured to determine a paging grouping mode supported by the base station, and/or, the first information is configured to determine a mapping relation between a paging group determined by the paging grouping mode supported by the base station and a paging grouping resource.

The information processing apparatus provided by embodiments of the disclosure and applied to the base station may include the sending module 41 configured to broadcast the first information.

The information processing apparatus provided by embodiments of the disclosure and applied to the base station may include the sending module 41 configured to send the first information, in which the first information includes: paging grouping resource information, or paging group information and the paging grouping resource information.

The paging group information indicates the paging group, and a paging grouping mode adopted by the paging group is the paging grouping mode supported by the base station. The paging grouping resource information indicates a paging grouping resource assigned to the paging group indicated by the paging group information.

In an embodiment, one paging group maps to one or more paging grouping resources; or, a plurality of paging groups map to one or more paging grouping resources.

In an embodiment, the paging grouping mode includes at least one of: a network-assigned paging grouping mode or a UE-ID-based paging grouping mode.

The information processing apparatus provided by embodiments of the disclosure and applied to the base station may include the sending module 41 configured to: in response to the base station supporting the network-assigned paging grouping mode, send relation information indicating the mapping relation between the paging group and the paging grouping resource.

The information processing apparatus provided by embodiments of the disclosure and applied to the base station may include the sending module 41 configured to: in response to the base station not supporting the network-assigned paging grouping mode, but supporting the UE-ID-based paging grouping mode, send the paging grouping resource information.

The information processing apparatus provided by embodiments of the disclosure and applied to the base station may include: a first processing module, configured to, in response to the base station neither supporting the network-assigned paging grouping mode nor supporting the UE-ID-based paging grouping mode, not send the paging grouping resource information.

The information processing apparatus provided by embodiments of the disclosure and applied to the base station may include the sending module 41 configured to: in response to the base station supporting the network-assigned paging grouping mode, but not supporting the UE-ID-based paging grouping mode, send the relation information indicating the mapping relation between the paging group and the paging grouping resource.

The information processing apparatus provided by embodiments of the disclosure and applied to the base station may include the sending module 41 configured to: in response to the base station supporting both the network-assigned paging grouping mode and the UE-ID-based paging grouping mode, send the relation information indicating the mapping relation between the paging group and the paging grouping resource.

It is noted that those skilled in the art may understand that the apparatus provided in the embodiments of the disclosure may be used alone or together with some of the devices in the embodiments of the disclosure or some of the devices in the related art.

With respect to the apparatus in the above embodiments, the specific manner in which each module performs an operation has been described in detail in the embodiments relating to the method, and will not be described in detail herein.

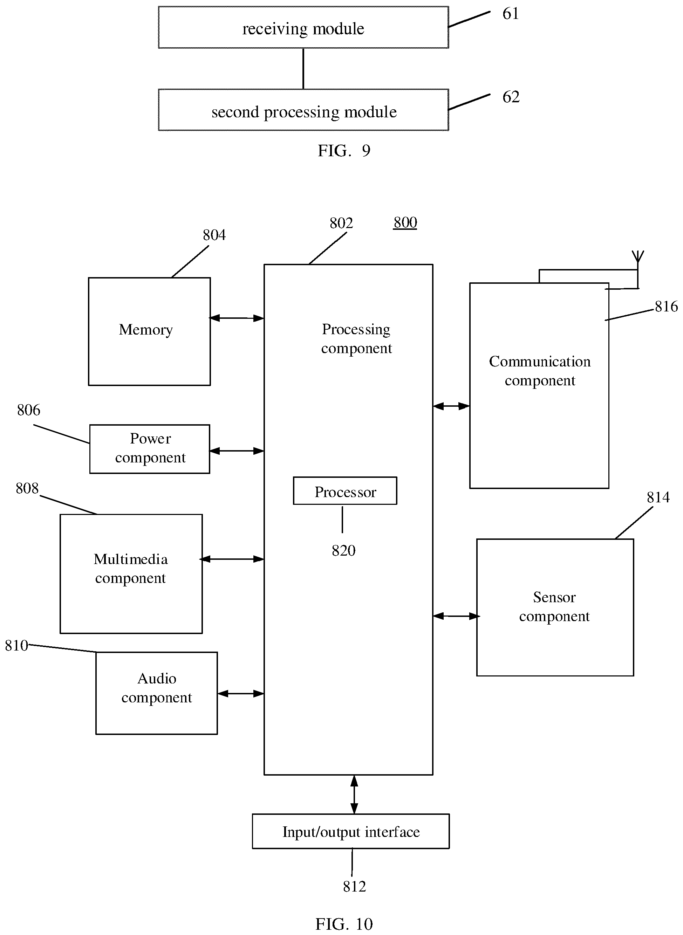

As illustrated in FIG. 9, embodiments of the disclosure provides an information processing apparatus, which is applied to a UE. The apparatus includes:
a receiving module 61, configured to receive first information; and
a second processing module 62, configured to determine a paging grouping mode supported by a base station based on the first information, and/or, determine a mapping relation between a paging group determined by the paging grouping mode supported by the base station and a paging grouping resource based on the first information.

In an embodiment, the first information includes: paging grouping resource information, or paging group information and the paging grouping resource information.

The paging group information indicates the paging group, and a paging grouping mode adopted by the paging group is the paging grouping mode supported by the base station. The paging grouping resource information indicates a paging grouping resource assigned to the paging group indicated by the paging group information.

In an embodiment, one paging group maps to one or more paging grouping resources; or, a plurality of paging groups map to one or more paging grouping resources.

In an embodiment, the paging grouping mode includes at least one of: a network-assigned paging grouping mode or a UE-ID-based paging grouping mode.

The information processing apparatus provided by embodiments of the disclosure and applied to the base station may include the second processing module 62 configured to: in response to the first information including relation information indicating the mapping relation between the paging group and the paging grouping resource, determine that the base station supports the network-assigned paging grouping mode.

The information processing apparatus provided by embodiments of the disclosure and applied to the base station may include the second processing module 62 configured to: in response to the first information including paging grouping resource information, determine that the base station does not support the network-assigned paging grouping mode.

The information processing apparatus provided by embodiments of the disclosure and applied to the base station may include the second processing module 62 configured to: in response to the first information including the paging grouping resource information, determine that the base station does not support the network-assigned paging grouping mode but supports the UE-ID-based paging grouping mode.

The information processing apparatus provided by embodiments of the disclosure and applied to the base station may include the second processing module 62 configured to: in response to the first information not including the paging grouping resource information, determine that the base station neither supports the network-assigned paging grouping mode nor the UE-ID-based paging grouping mode.

The information processing apparatus provided by embodiments of the disclosure and applied to the base station may include the second processing module 62 configured to: in response to the first information including the relation information, determine a paging grouping resource corresponding to a paging group where the UE is located based on the relation information.

The information processing apparatus provided by embodiments of the disclosure and applied to the base station may include the second processing module 62 configured to: in response to the relation information including paging group information of the paging group where the UE is located, determine the paging grouping resource corresponding to the paging group where the UE is located based on the relation information.

The second processing module 62 is further configured to: in response to the first information including the relation information, determine the paging grouping resource corresponding to the paging group where the UE is located based on the relation information and a number of paging grouping resources mapping to the paging group in the relation information.

It is noted that those skilled in the art may understand that the apparatus provided in the embodiments of the disclosure may be used alone or together with some of the devices in the embodiments of the disclosure or some of the devices in the related art.

With respect to the apparatus in the above embodiments, the specific manner in which each module performs an operation has been described in detail in the embodiments relating to the method, and will not be described in detail herein.

Embodiments of the disclosure provide a communication device. The communication device includes:
a processor; and
a memory for storing instructions executable by the processor; in which
the processor is configured to, when execute the executable instructions, perform implement the information processing method of any embodiment of the disclosure.

In an embodiment, the communication device can be a base station or a UE.

The processor may include various types of storage mediums that are non-transitory computer storage mediums capable of continuing to memorize the information stored thereon after the UE is powered down.

The processor may be connected to the memory via a bus or the like for reading executable programs stored on the memory, e.g., at least one of the methods shown in FIGS. 2-7.

Embodiments of the disclosure also provide a computer storage medium having computer executable programs stored thereon. When the executable programs are executed by a processor, the information processing method of any embodiment of the disclosure is implemented, e.g., at least one of the methods as shown in FIGS. 2-7.

With respect to the device or the storage medium in the above embodiments, the specific manner in which each module performs an operation has been described in detail in the embodiments relating to the method, and will not be described in detail herein.

FIG. 10 is a block diagram illustrating a UE 800 according to an exemplary embodiment. For example, the UE 800 may be a mobile phone, a computer, a digital broadcasting UE, a message transceiver device, a game console, a tablet device, a medical device, a fitness device and a personal digital assistant.

As illustrated in FIG. 10, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, telephone calls, data communications, camera operations, and recording operations. The processing component 802 may include one or more processors 820 to perform all or part of the steps in the above described method. Moreover, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, videos, etc. The memory 804 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 806 provides power to various components of the UE 800. The power component 806 may include a power management system, one or more power sources, and any other components associated with the generation, management, and distribution of power in the UE 800.

The multimedia component 808 includes a screen providing an output interface between the UE 800 and a user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a period of time and a pressure associated with the touch or swipe action. In some embodiments, the multimedia component 808 includes a front-facing camera and/or a rear-facing camera. When the UE 800 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 810 is configured to output and/or input audio signals. For example, the audio component 810 includes a microphone (MIC) configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the UE 800. For instance, the sensor component 814 may detect an open/closed status of the UE 800, relative positioning of components, e.g., the display and the keypad, of the UE 800, a change in position of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may also include a light sensor, such as a Complementary Metal Oxide Semiconductor (CMOS) or Charge-Coupled Device (CCD) image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the UE 800 and other devices. The UE 800 can access a wireless network based on a communication standard, such as Wi-Fi, 2G or 3G, or a combination thereof. In an embodiment, the communication component 816 receives a broadcast signal from an external broadcast management system or broadcasts associated information via a broadcast channel. In an embodiment, the communication component 816 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In embodiments, the UE 800 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described method.

In embodiments, there is also provided a non-transitory computer readable storage medium including instructions, such as the memory 804, executable by the processor 820 in the UE 800, for performing the above method. For example, the non-transitory computer-readable storage medium may be a ROM, a Random Access Memory (RAM), a CD-ROM, a magnetic tape, a floppy disc, and an optical data storage device.

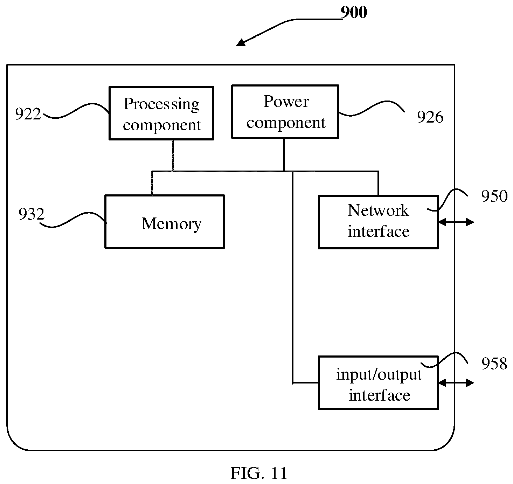

FIG. 11 is a schematic diagram illustrating a structure of a base station of an embodiment of the disclosure. For example, the base station 900 may be provided as a network side device. As illustrated in FIG. 11, the base station 900 includes a processing component 922 consisting of one or more processors, and memory resources represented by a memory 932 for storing instructions that may be executed by the processing component 922, such as applications. The application programs stored in the memory 932 may include one or more modules each corresponding to a set of instructions. In addition, the processing component 922 is configured to execute the instructions to perform any of the methods described above that are applicable to the base station, for example, the methods shown in FIGS. 4 to 10.

The base station 900 may also include a power component 926 configured to perform power management of the base station 900, a wired or wireless network interface 950 configured to connect the base station 900 to a network, and an I/O interface 958. The base station 900 may operate based on an operating system stored in the memory 932, such as Windows Server TM, Mac OS XTM, UnixTM, LinuxTM, FreeBSDTM, or the like.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as illustrative only, with a true scope of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. An information processing method, performed in a wireless communication system comprising a base station and a user equipment, UE, comprising:
sending (S21), by the base station, first information, wherein the first information is configured to determine at least one of: a paging grouping mode supported by the base station, or a mapping relation between a paging group determined by the paging grouping mode supported by the base station and a paging grouping resource, wherein the paging grouping mode comprises at least one of: a network-assigned paging grouping mode; or a UE-identifier, ID-based paging grouping mode;
receiving (S41), by the UE, the first information;
wherein the method further comprises:
in response to determining that the first information comprises relation information indicating the mapping relation between the paging group and the paging grouping resource, determining, by the UE, that the base station supports the network-assigned paging grouping mode;
in response to determining that the first information comprises paging grouping resource information, determining, by the UE, that the base station does not support the network-assigned paging grouping mode;
in response to determining that the first information comprises the paging grouping resource information, determining, by the UE, that the base station supports the UE-ID-based paging grouping mode and does not support the network-assigned paging grouping mode; or
in response to determining that the first information does not comprise the paging grouping resource information, determining, by the UE, that the base station neither supports the network-assigned paging grouping mode nor the UE-ID-based paging grouping mode.

2. The method of claim 1, wherein the first information comprises:
paging grouping resource information;
or,
paging group information and the paging grouping resource information;
wherein the paging group information indicates the paging group, a paging grouping mode adopted by the paging group is the paging grouping mode supported by the base station, and the paging grouping resource information indicates a paging grouping resource allocated to the paging group indicated by the paging group information.

3. The method of claim 1 or 2, wherein,
one paging group maps to one or more paging grouping resources; or, a plurality of paging groups map to one or more paging grouping resources.

4. An information processing method, performed by a user equipment, UE, comprising:
receiving (S41) first information; and
determining (S42), based on the first information, at least one of: a paging grouping mode supported by a base station, or a mapping relation between a paging group determined by the paging grouping mode supported by the base station and a paging grouping resource, wherein the paging grouping mode comprises at least one of: a network-assigned paging grouping mode; or a UE-identifier, ID-based paging grouping mode;
wherein determining (S42) the paging grouping mode supported by the base station based on the first information comprises at least one of:
in response to determining that the first information comprises relation information indicating the mapping relation between the paging group and the paging grouping resource, determining that the base station supports the network-assigned paging grouping mode;
in response to determining that the first information comprises paging grouping resource information, determining that the base station does not support the network-assigned paging grouping mode;
in response to determining that the first information comprises the paging grouping resource information, determining that the base station supports the UE-ID-based paging grouping mode and does not support the network-assigned paging grouping mode; or
in response to determining that the first information does not comprise the paging grouping resource information, determining that the base station neither supports the network-assigned paging grouping mode nor the UE-ID-based paging grouping mode.

5. The method of claim 4, wherein the first information comprises:
paging grouping resource information;
or,
paging group information and the paging grouping resource information, wherein, the paging group information indicates the paging group, a paging grouping mode adopted by the paging group is the paging grouping mode supported by the base station, and the paging grouping resource information indicates a paging grouping resource allocated to the paging group indicated by the paging group information.

6. The method of claim 4 or 5, wherein,
one paging group maps to one or more paging grouping resources; or, a plurality of paging groups map to one or more paging grouping resources.

7. The method of claim 4, further comprising:
in response to determining (S51) that the first information comprises the relation information, determining (S51) a paging grouping resource corresponding to a paging group where the UE is located based on the relation information;

8. The method of claim 7, wherein determining (S51) the paging grouping resource corresponding to the paging group where the UE is located based on the relation information, comprises:
in response to determining that the relation information comprises paging group information of the paging group where the UE is located, determining the paging grouping resource corresponding to the paging group where the UE is located based on the relation information.

9. The method of claim 4, further comprising:
in response to determining (S61) that the first information comprises the relation information, determining (S61) the paging grouping resource corresponding to a paging group where the UE is located based on the relation information and a number of paging grouping resources mapping to the paging group in the relation information.

10. A wireless communication system, comprising:
an information processing apparatus applied to a base station, comprising:
a sending module (41), configured to send first information, wherein the first information is configured to determine at least one of: a paging grouping mode supported by the base station, or a mapping relation between a paging group determined by the paging grouping mode supported by the base station and a paging grouping resource, wherein the paging grouping mode comprises at least one of: a network-assigned paging grouping mode; or a user equipment, UE-identifier, ID-based paging grouping mode; and
an information processing apparatus applied to a UE, comprising:
a receiving module (61), configured to receive the first information; and
a second processing module (62), configured to:
in response to determining that the first information comprises relation information indicating the mapping relation between the paging group and the paging grouping resource, determine that the base station supports the network-assigned paging grouping mode;
in response to determining that the first information comprises paging grouping resource information, determine that the base station does not support the network-assigned paging grouping mode;
in response to determining that the first information comprises the paging grouping resource information, determine that the base station supports the UE-ID-based paging grouping mode and does not support the network-assigned paging grouping mode; or
in response to determining that the first information does not comprise the paging grouping resource information, determine that the base station neither supports the network-assigned paging grouping mode nor the UE-ID-based paging grouping mode.

## Patentansprüche

1. Ein Informationsverarbeitungsverfahren, das in einem drahtlosen Kommunikationssystem durchgeführt wird, das eine Basisstation und ein Nutzergerät, UE, aufweist, mit folgenden Schritten:
Senden (S21), durch die Basisstation, von ersten Informationen, wobei die ersten Informationen dazu konfiguriert sind, zumindest eines von Folgendem zu bestimmen: einen Funkrufgruppierungsmodus, der durch die Basisstation unterstützt wird, oder eine Zuordnungsbeziehung zwischen einer Funkrufgruppe, die durch den Funkrufgruppierungsmodus bestimmt wird, der durch die Basisstation unterstützt wird, und einer Funkrufgruppierungsressource, wobei der Funkrufgruppierungsmodus zumindest eines von Folgendem aufweist: einen Netzwerk-zugewiesenen Funkrufgruppierungsmodus; oder einen UE-Kennungs-, ID-basierten Funkrufgruppierungsmodus;
Empfangen (S41), durch das UE, der ersten Informationen;
wobei das Verfahren ferner folgende Schritte aufweist:
als Reaktion auf das Bestimmen, dass die ersten Informationen Beziehungsinformationen aufweisen, die die Zuordnungsbeziehung zwischen der Funkrufgruppe und der Funkrufgruppierungsressource angeben, Bestimmen, durch das UE, dass die Basisstation den Netzwerk-zugewiesenen Funkrufgruppierungsmodus unterstützt;
als Reaktion auf das Bestimmen, dass die ersten Informationen Funkrufgruppierungsressourceninformationen aufweisen, Bestimmen, durch das UE, dass die Basisstation den Netzwerk-zugewiesenen Funkrufgruppierungsmodus nicht unterstützt;
als Reaktion auf das Bestimmen, dass die ersten Informationen die Funkrufgruppierungsressourceninformationen aufweisen, Bestimmen, durch das UE, dass die Basisstation den UE-ID-basierten Funkrufgruppierungsmodus unterstützt und den Netzwerk-zugewiesenen Funkrufgruppierungsmodus nicht unterstützt; oder
als Reaktion auf das Bestimmen, dass die ersten Informationen die Funkrufgruppierungsressourceninformationen nicht aufweisen, Bestimmen, durch das UE, dass die Basisstation weder den Netzwerk-zugewiesenen Funkrufgruppierungsmodus noch den UE-ID-basierten Funkrufgruppierungsmodus unterstützt.

2. Das Verfahren gemäß Anspruch 1, wobei die ersten Informationen Folgendes aufweisen:
Funkrufgruppierungsressourceninformationen;
oder,
Funkrufgruppeninformationen und die Funkrufgruppierungsressourceninformationen;
wobei die Funkrufgruppeninformationen die Funkrufgruppe angeben, ein von der Funkrufgruppe angenommener Funkrufgruppierungsmodus der von der Basisstation unterstützte Funkrufgruppierungsmodus ist und die Funkrufgruppierungsressourceninformationen eine Funkrufgruppierungsressource angeben, die der durch die Funkrufgruppeninformationen angegebenen Funkrufgruppe zugewiesen ist.

3. Das Verfahren gemäß Anspruch 1 oder 2, wobei
eine Funkrufgruppe einer oder mehreren Funkrufgruppierungsressourcen zugeordnet ist; oder eine Mehrzahl von Funkrufgruppen einer oder mehreren Funkrufgruppierungsressourcen zugeordnet ist.

4. Ein Informationsverarbeitungsverfahren, das von einem Nutzergerät, UE, durchgeführt wird, mit folgenden Schritten:
Empfangen (S41) erster Informationen; und
Bestimmen (S42), basierend auf den ersten Informationen, zumindest eines von Folgendem: einen Funkrufgruppierungsmodus, der durch eine Basisstation unterstützt wird, oder eine Zuordnungsbeziehung zwischen einer Funkrufgruppe, die durch den Funkrufgruppierungsmodus bestimmt wird, der durch die Basisstation unterstützt wird, und einer Funkrufgruppierungsressource, wobei der Funkrufgruppierungsmodus zumindest eines von Folgendem aufweist: einen Netzwerk-zugewiesenen Funkrufgruppierungsmodus; oder einen UE-Kennungs-, ID-basierten Funkrufgruppierungsmodus;
wobei das Bestimmen (S42) des Funkrufgruppierungsmodus, der durch die Basisstation unterstützt wird, basierend auf den ersten Informationen zumindest eines von Folgendem aufweist:
als Reaktion auf das Bestimmen, dass die ersten Informationen Beziehungsinformationen aufweisen, die die Zuordnungsbeziehung zwischen der Funkrufgruppe und der Funkrufgruppierungsressource angeben, Bestimmen, dass die Basisstation den Netzwerk-zugewiesenen Funkrufgruppierungsmodus unterstützt;
als Reaktion auf das Bestimmen, dass die ersten Informationen Funkrufgruppierungsressourceninformationen aufweisen, Bestimmen, dass die Basisstation den Netzwerk-zugewiesenen Funkrufgruppierungsmodus nicht unterstützt;
als Reaktion auf das Bestimmen, dass die ersten Informationen die Funkrufgruppierungsressourceninformationen aufweisen, Bestimmen, dass die Basisstation den UE-ID-basierten Funkrufgruppierungsmodus unterstützt und den Netzwerk-zugewiesenen Funkrufgruppierungsmodus nicht unterstützt; oder
als Reaktion auf das Bestimmen, dass die ersten Informationen die Funkrufgruppierungsressourceninformationen nicht aufweisen, Bestimmen, dass die Basisstation weder den Netzwerk-zugewiesenen Funkrufgruppierungsmodus noch den UE-ID-basierten Funkrufgruppierungsmodus unterstützt.

5. Das Verfahren gemäß Anspruch 4, wobei die ersten Informationen Folgendes aufweisen:
Funkrufgruppierungsressourceninformationen;
oder,
Funkrufgruppeninformationen und die Funkrufgruppierungsressourceninformationen, wobei die Funkrufgruppeninformationen die Funkrufgruppe angeben, ein von der Funkrufgruppe angenommener Funkrufgruppierungsmodus der von der Basisstation unterstützte Funkrufgruppierungsmodus ist und die Funkrufgruppierungsressourceninformationen eine Funkrufgruppierungsressource angeben, die der durch die Funkrufgruppeninformationen angegebenen Funkrufgruppe zugewiesen ist.

6. Das Verfahren gemäß Anspruch 4 oder 5, wobei
eine Funkrufgruppe einer oder mehreren Funkrufgruppierungsressourcen zugeordnet ist; oder eine Mehrzahl von Funkrufgruppen einer oder mehreren Funkrufgruppierungsressourcen zugeordnet ist.

7. Das Verfahren gemäß Anspruch 4, das ferner folgende Schritte aufweist:
als Reaktion auf das Bestimmen (S51), dass die ersten Informationen die Beziehungsinformationen aufweisen, Bestimmen (S51) einer Funkrufgruppierungsressource, die einer Funkrufgruppe entspricht, in der sich das UE befindet, basierend auf den Beziehungsinformationen;

8. Das Verfahren gemäß Anspruch 7, wobei das Bestimmen (S51) der Funkrufgruppierungsressource, die der Funkrufgruppe entspricht, in der sich das UE befindet, basierend auf den Beziehungsinformationen, folgendes Schritte aufweist:
als Reaktion auf das Bestimmen, dass die Beziehungsinformationen Funkrufgruppeninformationen der Funkrufgruppe aufweisen, in der sich das UE befindet, Bestimmen der Funkrufgruppierungsressource, die der Funkrufgruppe entspricht, in der sich das UE befindet, basierend auf den Beziehungsinformationen.

9. Das Verfahren gemäß Anspruch 4, das ferner folgende Schritte aufweist:
als Reaktion auf das Bestimmen (S61), dass die ersten Informationen die Beziehungsinformationen aufweisen, Bestimmen (S61) der Funkrufgruppierungsressource, die einer Funkrufgruppe entspricht, in der sich das UE befindet, basierend auf den Beziehungsinformationen und einer Anzahl von Funkrufgruppierungsressourcen, die der Funkrufgruppe in den Beziehungsinformationen zugeordnet sind.

10. Ein drahtloses Kommunikationssystem, das folgende Merkmale aufweist:
eine Informationsverarbeitungsvorrichtung, die auf eine Basisstation angewendet wird, die folgende Merkmale auweist:
ein Sendemodul (41), das dazu konfiguriert ist, erste Informationen zu senden, wobei die ersten Informationen dazu konfiguriert sind, zumindest eines von Folgendem zu bestimmen: einen Funkrufgruppierungsmodus, der durch die Basisstation unterstützt wird, oder eine Zuordnungsbeziehung zwischen einer Funkrufgruppe, die durch den Funkrufgruppierungsmodus bestimmt wird, der durch die Basisstation unterstützt wird, und einer Funkrufgruppierungsressource, wobei der Funkrufgruppierungsmodus zumindest eines von Folgendem aufweist: einen Netzwerk-zugewiesenen Funkrufgruppierungsmodus; oder einen Benutzergerät-, UE-Kennungs-, ID-basierten Funkrufgruppierungsmodus; und
eine Informationsverarbeitungsvorrichtung, die auf ein UE angewendet wird, die folgende Merkmale aufweist:
ein Empfangsmodul (61), das dazu konfiguriert ist, die ersten Informationen zu empfangen; und
ein zweites Verarbeitungsmodul (62), das dazu konfiguriert:
als Reaktion auf das Bestimmen, dass die ersten Informationen Beziehungsinformationen aufweisen, die die Zuordnungsbeziehung zwischen der Funkrufgruppe und der Funkrufgruppierungsressource angeben, zu bestimmen, dass die Basisstation den Netzwerk-zugewiesenen Funkrufgruppierungsmodus unterstützt;
als Reaktion auf das Bestimmen, dass die ersten Informationen Funkrufgruppierungsressourceninformationen aufweisen, zu bestimmen, dass die Basisstation den Netzwerk-zugewiesenen Funkrufgruppierungsmodus nicht unterstützt;
als Reaktion auf das Bestimmen, dass die ersten Informationen die Funkrufgruppierungsressourceninformationen aufweisen, zu bestimmen, dass die Basisstation den UE-ID-basierten Funkrufgruppierungsmodus unterstützt und den Netzwerk-zugewiesenen Funkrufgruppierungsmodus nicht unterstützt; oder
als Reaktion auf das Bestimmen, dass die ersten Informationen die Funkrufgruppierungsressourceninformationen nicht aufweisen, zu bestimmen, dass die Basisstation weder den Netzwerk-zugewiesenen Funkrufgruppierungsmodus noch den UE-ID-basierten Funkrufgruppierungsmodus unterstützt.

## Revendications

1. Procédé de traitement d'informations, mis en œuvre dans un système de communication sans fil comprenant une station de base et un équipement utilisateur, UE, comprenant :
l'envoi (S21), par la station de base, de première information, dans lequel la première information est configurée pour déterminer au moins l'un : d'un mode de regroupement de radiomessagerie pris en charge par la station de base, ou d'une relation de mise en correspondance entre un groupe de radiomessagerie déterminée par le mode de regroupement de radiomessagerie pris en charge par la station de base et une ressource de regroupement de radiomessagerie, dans lequel le mode de regroupement de radiomessagerie comprend au moins l'un : d'un mode de regroupement de radiomessagerie attribué par réseau ; ou d'un mode de regroupement de radiomessagerie basé sur l'identifiant, ID, d'un UE ;
la réception (S41), par l'UE, de la première information ;
dans lequel le procédé comprend en outre : en réponse à la détermination selon laquelle la première information comprend des informations de relation indiquant la relation de mise en correspondance entre le groupe de radiomessagerie et la ressource de regroupement de radiomessagerie, la détermination, par l'UE, que la station de base prend en charge le mode de regroupement de radiomessagerie attribué par réseau ;
en réponse à la détermination que la première information comprend des informations relatives aux ressources de regroupement de radiomessagerie, la détermination, par l'UE, que la station de base ne prend pas en charge le mode de regroupement de radiomessagerie attribué par réseau ;
en réponse à la détermination que la première information comprend les informations relatives aux ressources de regroupement de radiomessagerie, la détermination, par l'UE, que la station de base prend en charge le mode de regroupement de radiomessagerie basé sur l'UE-ID et ne prend pas en charge le mode de regroupement de radiomessagerie attribué par réseau ; ou
en réponse à la détermination que la première information ne comprend pas les informations relatives aux ressources de regroupement de radiomessagerie, la détermination, par l'UE, que la station de base ne prend en charge ni le mode de regroupement de radiomessagerie attribué par réseau, ni le mode de regroupement de radiomessagerie basé sur l'UE-ID.

2. Procédé selon la revendication 1, dans lequel la première information comprend :
des informations relatives aux ressources de regroupement de radiomessagerie ;
ou
des informations relatives aux groupes de radiomessagerie et les informations relatives aux ressources de regroupement de radiomessagerie ;
dans lequel les informations relatives au groupe de radiomessagerie indiquent le groupe de radiomessagerie, un mode de regroupement de radiomessagerie adopté par le groupe de radiomessagerie est le mode de regroupement de radiomessagerie pris en charge par la station de base, et les informations relatives aux ressources de regroupement de radiomessagerie indiquent une ressource de regroupement de radiomessagerie attribuée au groupe de radiomessagerie indiqué par les informations relatives au groupe de radiomessagerie.

3. Procédé selon la revendication 1 ou 2, dans lequel :
un groupe de radiomessagerie correspond à une ou plusieurs ressources de regroupement de radiomessagerie ; ou, une pluralité de groupes de radiomessagerie correspondent à une ou plusieurs ressources de regroupement de radiomessagerie.

4. Procédé de traitement d'informations, mis en œuvre par un équipement utilisateur, UE, comprenant :
la réception (S41) de la première information ; et
la détermination (S42), sur la base de la première information, au moins l'un : d'un mode de regroupement de radiomessagerie pris en charge par une station de base, ou une relation de mise en correspondance entre un groupe de radiomessagerie déterminé par le mode de regroupement de radiomessagerie pris en charge par la station de base et une ressource de regroupement de radiomessagerie, dans lequel le mode de regroupement de radiomessagerie comprend au moins l'un : d'un mode de regroupement de radiomessagerie attribué par réseau ; ou d'un mode de regroupement de radiomessagerie basé sur l'identifiant, ID, d'un UE ;
dans lequel la détermination (S42) du mode de regroupement de radiomessagerie pris en charge par la station de base sur la base de la première information comprend au moins l'un des éléments suivantes :
en réponse à la détermination que la première information comprend des informations de relation indiquant la relation de mise en correspondance entre le groupe de radiomessagerie et la ressource de regroupement de radiomessagerie, la détermination que la station de base prend en charge le mode de regroupement de radiomessagerie attribué par réseau ;
en réponse à la détermination que la première information comprend des informations relatives aux ressources de regroupement de radiomessagerie, la détermination que la station de base ne prend pas en charge le mode de regroupement de radiomessagerie attribué par réseau ;
en réponse à la détermination que la première information comprend les informations relatives aux ressources de regroupement de radiomessagerie, la détermination que la station de base prend en charge le mode de regroupement de radiomessagerie basé sur l'UE-ID et ne prend pas en charge le mode de regroupement de radiomessagerie attribué par réseau ; ou
en réponse à la détermination que la première information ne comprend pas les informations relatives aux ressources de regroupement de radiomessagerie, la détermination que la station de base ne prend en charge ni le mode de regroupement de radiomessagerie attribué par réseau, ni le mode de regroupement de radiomessagerie basé sur l'UE-ID.

5. Procédé selon la revendication 4, dans lequel la première information comprend :
des informations relatives aux ressources de regroupement de radiomessagerie ;
ou
des informations relatives au groupe de radiomessagerie et les informations relatives aux ressources de regroupement de radiomessagerie, dans lequel les informations relatives au groupe de radiomessagerie indiquent le groupe de radiomessagerie, un mode de regroupement de radiomessagerie adopté par le groupe de radiomessagerie est le mode de regroupement de radiomessagerie pris en charge par la station de base, et les informations relatives aux ressources de regroupement de radiomessagerie indiquent une ressource de regroupement de radiomessagerie attribuée au groupe de radiomessagerie indiqué par les informations relatives au groupe de radiomessagerie.

6. Procédé selon la revendication 4 ou 5, dans lequel :
un groupe de radiomessagerie correspond à une ou plusieurs ressources de regroupement de radiomessagerie ; ou, une pluralité de groupes de radiomessagerie correspondent à une ou plusieurs ressources de regroupement de radiomessagerie.

7. Procédé selon la revendication 4, comprenant en outre :
en réponse à la détermination (S51) que la première information comprend les informations de relation, la détermination (S51) d'une ressource de regroupement de radiomessagerie correspondant à un groupe de radiomessagerie dans lequel se trouve l'UE, sur la base des informations de relation ;

8. Procédé selon la revendication 7, dans lequel la détermination (S51) de la ressource de regroupement de radiomessagerie correspondant au groupe de radiomessagerie dans lequel se trouve l'UE, sur la base des informations de relation, comprend :
en réponse à la détermination que les informations de relation comprennent des informations relatives au groupe de radiomessagerie du groupe de radiomessagerie dans lequel se trouve l'UE, la détermination que la ressource de regroupement de radiomessagerie correspondant au groupe de radiomessagerie dans lequel se trouve l'UE, sur la base des informations de relation.

9. Procédé selon la revendication 4, comprenant en outre :
en réponse à la détermination (S61) que la première information comprend les informations de relation, la détermination (S61) de la ressource de regroupement de radiomessagerie correspondant à un groupe de radiomessagerie dans lequel se trouve l'UE, sur la base des informations de relation et d'un nombre de ressources de regroupement de radiomessagerie correspondant au groupe de radiomessagerie dans les informations de relation.

10. Système de communication sans fil, comprenant :
un dispositif de traitement d'informations destiné à une station de base, comprenant :
un module d'envoi (41), configuré pour envoyer la première information, dans lequel la première information est configurée pour déterminer au moins l'un : d'un mode de regroupement de radiomessagerie pris en charge par la station de base, ou d'une relation de mise en correspondance entre un groupe de radiomessagerie déterminée par le mode de regroupement de radiomessagerie pris en charge par la station de base et une ressource de regroupement de radiomessagerie, dans lequel le mode de regroupement de radiomessagerie comprend au moins l'un : d'un mode de regroupement de radiomessagerie attribué par réseau ; ou d'un mode de regroupement de radiomessagerie basé sur l'identifiant, ID, de l'équipement utilisateur (UE) ; et
un dispositif de traitement d'informations destiné à un UE, comprenant :
un module de réception (61), configuré pour recevoir la première information ; et
un deuxième module de traitement (62), configuré pour :
en réponse à la détermination que la première information comprend des informations de relation indiquant la relation de mise en correspondance entre le groupe de radiomessagerie et la ressource de regroupement de radiomessagerie, déterminer que la station de base prend en charge le mode de regroupement de radiomessagerie attribué par réseau ;
en réponse à la détermination que la première information comprend des informations relatives aux ressources de regroupement de radiomessagerie, déterminer que la station de base ne prend pas en charge le mode de regroupement de radiomessagerie attribué par réseau ;
en réponse à la détermination que la première information comprend les informations relatives aux ressources de regroupement de radiomessagerie, déterminer que la station de base prend en charge le mode de regroupement de radiomessagerie basé sur l'UE-ID et ne prend pas en charge le mode de regroupement de radiomessagerie attribué par réseau ; ou
en réponse à la détermination que la première information ne comprend pas les informations relatives aux ressources de regroupement de radiomessagerie, déterminer que la station de base ne prend en charge ni le mode de regroupement de radiomessagerie attribué par réseau, ni le mode de regroupement de radiomessagerie basé sur l'UE-ID.
